# EUROPEAN PATENT SPECIFICATION

(11) **EP 0 990 546 B1**
(45) Date of publication and mention of the grant of the patent: **05.03.2003**
(21) Application number: 99305213.3
(22) Date of filing: 01.07.1999
(51) Int. Cl.: B60J 10/00, B60J 10/08

(54) **Sealing, trimming and finishing strips**
Dicht-, Zier- und Abdeckungsprofilleisten
Bandes d'étanchéité, de garnissage et de finition

(30) Priority: 29.09.1998 GB 9821143
(43) Date of publication of application: 05.04.2000
(73) Proprietor: GenCorp Property Inc., Sacramento, CA 95853-7012 (US)
(72) Inventor: Maass, Klaus Peter, 41749 Viersen (DE)
(74) Representative: Foster, David Martyn

(56) References cited:
- EP-A- 0 794 078
- DE-A- 19 519 866
- FR-A- 794 152
- US-A- 3 195 948
- US-A- 4 976 069
- US-A- 5 038 522
- US-A- 5 352 009

## Description

The invention relates to sealing, trimming and finishing strips, according to the preambles of claims 1 and 10. Strips embodying the invention, and to be described in more detail below by way of example only, are for use in motor vehicle body construction. However, they may be used for many other purposes.

EP-A-0794078 and US-A-5038522 disclose sealing strips for vehicles including a lip which covers over the edge of the trim material or panel in the vicinity of a door opening in order to hold the trim in position and cover its edge to provide a neat finish. The arrangements disclosed in these publications cannot cover trim edges of more than one orientation and are only suitable for covering trim edges that terminate at the same point around the opening.

According to the invention, there is provided a sealing, trimming or finishing strip for mounting along the periphery of a closable opening in a vehicle body, comprising a mounting portion carrying a lip adapted to be positioned along the periphery by the mounting portion and to embracingly receive a first edge of trim material or the like on the inside of the vehicle, characterised in that the mounting portion also supports edge receiving means spaced more outwardly of the opening than the lip by the mounting portion for embracingly receiving a second edge of trim material or the like on the inside of the vehicle.

According to the invention, there is further provided a sealing, trimming or finishing strip for mounting along the periphery of a closable opening in a vehicle body, comprising a mounting portion which supports a sealing portion adapted to be positioned by the mounting portion so as to be sealingly compressed by the closure of the opening and which also supports a lip for embracingly receiving a first edge of trim material or the like on the inside of the vehicle, characterised in that the sealing portion including edge receiving means for embracingly receiving a second edge of trim material on the inside of the vehicle.

Sealing, trimming and finishing strips embodying the invention will now be described, by way of example only, with reference to the accompanying diagrammatic drawings in which:
Figure 1 is a cross-section on the line I-I of Figure 3 through one of the strips showing its configuration when mounted on the vehicle body around part of a door opening therein;
Figure 2 corresponds to Figure 1 but shows the strip in the configuration which it has at a different part of the door opening;
Figure 3 shows a vehicle body for illustrating the different parts of the door opening respectively relevant to Figures 1 and 2.

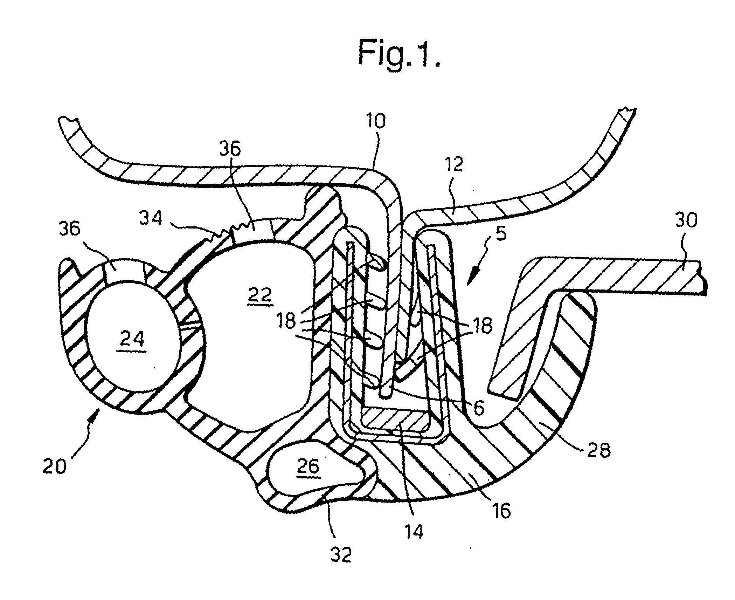

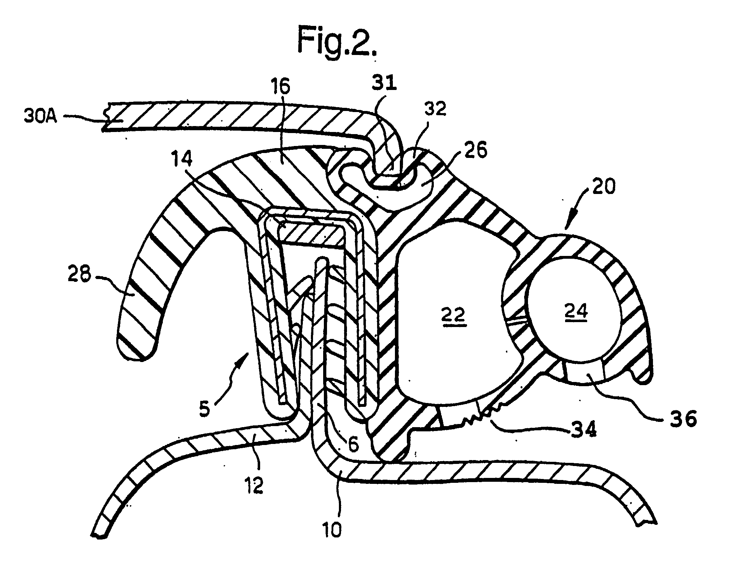

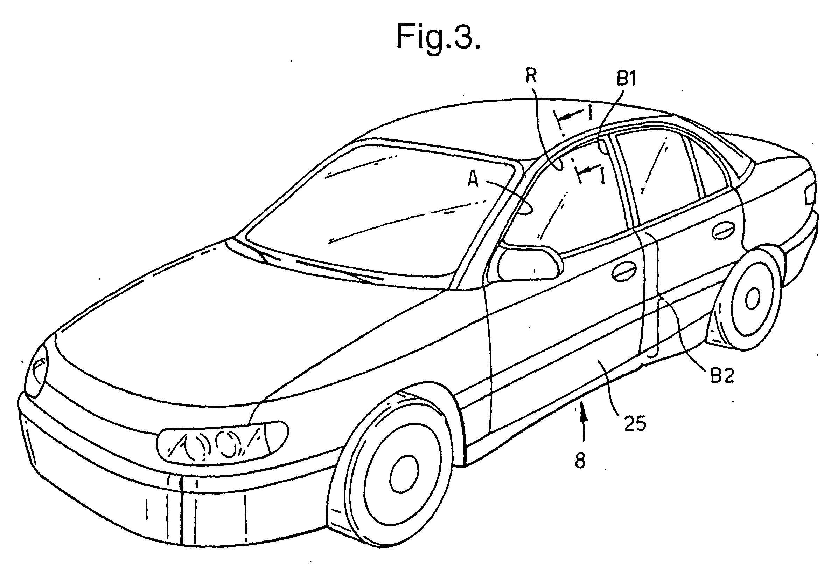

The sealing, trimming and finishing strip shown in Figures 1 and 2 comprises a channel-shaped gripping portion 5 which is used to mount the strip on a flange 6 running around the door opening 8 of Figure 3. The flange 6 is formed where the inner and outer body panels 10,12 of the vehicle come together at the door opening and are welded to form the flange. The plane of the flange thus coincides with the plane of the door opening.

The gripping portion 5 of the strip comprises a channel-shaped carrier 14 incorporated into plastics or rubber or similar material 16. The material 16 may be produced by an extrusion process, with the carrier 14 being incorporated into it during the extrusion process such as by using a cross-head extruder. The material 14 incorporates integral internal gripping lips 18. As shown in the Figure, the gripping portion 5 embracingly grips the mounting flange 6, and the lips 18 help to ensure that the gripping portion 5 firmly grips the flange. The lips 18 may be of varying sizes, different on each side for example, and there may be more or fewer than the numbers shown in the Figure.

The carrier 14 may take any suitable form. It may be metallic or non-metallic but is advantageously resilient to assist in holding the gripping portion 5 firmly on the flange 6. The carrier may, for example, comprise an unapertured or apertured metal channel. Instead, it may comprise U-shaped elements arranged side-by-side to form the channel and connected together such as by flexible integral connecting links or entirely disconnected. Other forms of carrier are possible. The carrier may, for example, be made of wire looped to and fro to form the channel.

The gripping portion 5 supports a sealing portion 20 which, in this example, is of bi-tubular form comprising a main tubular part 22 supporting an integral subsidiary tubular part 24. The sealing part 20 is advantageously made of soft flexible material such as foamed or cellular plastics or rubber material. It may be integrally extruded with the material 16 or may be produced separately and secured thereto such as by adhesive (as in the case illustrated in Figures 1 and 2).

The gripping portion 5 together with the sealing portion 20 extend longitudinally around the periphery of the door opening 8. In this way, the gripping portion 5 supports the sealing portion 20 to run along the outside edge of the door opening so as to be partially compressed by the closing door 25, thus providing a weather seal.

It will also be noted that the sealing portion 20 incorporates an additional longitudinally extending hollow chamber 26 for a purpose to be described.

The material 16 of the gripping portion 5 is integrally extended, on the outside wall of the channel opposite to the sealing portion 20, to form a flexible lip 28, this lip 28 thus extending around the door opening on the inside of the vehicle.

Figure 1 shows the configuration adopted where the strip shown runs along the A pillar of the vehicle (shown at "A" in Figure 3), along the roof part of the door opening (shown at "R" in Figure 3), and along the upper part,only, of the "B" pillar (that is, along the part "B1" in Figure 3). As shown somewhat diagrammatically in Figure 1, along these parts of the door opening 8 the lip 28 acts as a so-called "cosmetic" lip and covers over the edge of the trim material or panel 30 alongside these parts of the door opening. The cosmetic lip 28 thus helps to hold the trim 30 in position and covers over its edge to provide a neat finish.

Figure 2 shows the configuration adopted over the part of "B" pillar below the waist line of the vehicle (that is, approximately the part "B2" in Figure 3). Here, the vehicle trim is differently oriented as shown at 30A in Figure 2, and the cosmetic lip 28 is no longer suitable for covering its edge 31. Instead, the trim 30A is attached to the B pillar so that its edge 31 presses into the outer wall 32 of the hollow chamber 26 of the sealing part 20. This outer wall 32 is thus pressed inwardly of the chamber 26 and thus neatly covers the edge 31.

In this way, therefore, the same strip can be used around the entire periphery of the door opening but provides two different means (the cosmetic lip 28 and the flexible wall 32) for receiving and neatly covering the distal edge of the trim panel, these two different means being arranged to suit the different configurations of the trim panel at different parts of the door opening. Where the trim panel is embraced by the cosmetic lip 28 as shown in Figure 1, the outer wall 32 of the hollow chamber 26 remains in the position shown in Figure 1 and ensures that the strip has a smoothly continuous and coherent outward appearance.

Although the hollow chamber 26 and its outer wall 32 have been shown as being part of the sealing portion 20, they could instead be incorporated in the gripping portion 5.

Figures 1 and 2 show how the wall of the main sealing tube 22 may be provided with corrugations 34 to increase its flexibility, and how both this tube 22 and the subsidiary tube 24 may be provided with holes 36 at intervals along their lengths to prevent pressure build-up inside the tubes.

## Claims

1. A sealing, trimming or finishing strip for mounting along the periphery of a closable opening in a vehicle body, comprising a mounting portion (5) carrying a lip (28) adapted to be positioned along the periphery by the mounting portion (5) and to embracingly receive a first edge of trim material (30) or the like on the inside of the vehicle, **characterised in that** the mounting portion (5) also supports edge receiving means (26,32) spaced more outwardly of the opening than the lip (28) by the mounting portion (5) for embracingly receiving a second edge of trim material (30A) or the like on the inside of the vehicle.

2. A strip according to claim 1, **characterised in that** the edge receiving means comprises a flexible wall (32) against which the second edge of the trim material (30A) presses and which flexes to embrace that edge.

3. A strip according to claim 2, **characterised in that** the flexible wall is a wall (32) of a hollow chamber (26) into which the flexible wall (32) is flexed by the second edge of the trim material (30A).

4. A strip according to any one of claims 1 to 3, **characterised in that** the mounting portion (5) supports a sealing portion (20) which is adapted to be positioned by the mounting portion (5) on the outside of the opening whereby to be sealingly compressed by the closure for the opening.

5. A strip according to claim 4, **characterised in that** the edge receiving means (26,32) is carried by the sealing portion (20).

6. A strip according to any preceding claim, **characterised in that** the mounting portion (5) is channel-shaped for embracingly gripping a flange (6) running along the periphery of the opening.

7. A strip according to claim 6, **characterised in that** the lip (28) extends over the outside of one side wall of the channel.

8. A strip according to claim 7, **characterised in that** the lip (28) extends substantially from the junction between the outside of the base of the channel and the said one side wall.

9. A strip according to claim 8, **characterised in that** the edge receiving means (26,32) is located adjacent the junction between the outside of the base of the channel and the other side wall.

10. A sealing, trimming or finishing strip for mounting along the periphery of a closable opening in a vehicle body, comprising a mounting portion (5) which supports a sealing portion (20) adapted to be positioned by the mounting portion (5) so as to be sealingly compressed by the closure of the opening and which also supports a lip (28) for embracingly receiving a first edge of trim material (30) or the like on the inside of the vehicle, **characterised in that** the sealing portion (20) includes edge receiving means (26,32) for embracingly receiving a second edge of trim material (30A) on the inside of the vehicle.

11. A strip according to claim 10, **characterised in that** the edge receiving means comprises a flexible wall (32) which flexes around the second edge of the trim material (30A).

12. A strip according to claim 11, **characterised in that** the flexible wall (32) is the outer wall of a hollow chamber (26) of the sealing portion.

13. A strip according to claim 10, **characterised in that** the mounting portion (5) is channel-shaped for embracingly gripping a mounting flange (6) running around the opening, **in that** the sealing portion (20) is mounted on the outside of one side wall of the channel, and **in that** the lip (28) is mounted to extend over the outside of the opposite side wall of the channel.

14. A strip according to claim 13, **characterised in that** the lip (28) extends from the outside of the base of the channel.

15. A vehicle defining a closable opening along the periphery of which is mounted a sealing, trimming or finishing strip according to any preceding claim, **characterised in that** trim material (30) on the inside of the vehicle adjacent the opening has its edge embracingly received by the lip (28) around a first part, only, of the periphery of the opening and has its edge embracingly received by the edge receiving means (26,32) along a second part, only, of the periphery of the opening.

16. A vehicle according to claim 15, **characterised in that** the closable opening is a door opening of the vehicle.

17. A vehicle according to claim 16, **characterised in that** the first part of the periphery of the opening comprises the A pillar, the roof part and the upper part of the B pillar of the vehicle, and the second part of the opening comprises a lower part of the B pillar.

## Patentansprüche

1. Dicht-, Zier- oder Abdeckleiste zum Anbringen entlang des Umfangs einer verschließbaren Öffnung einer Fahrzeugkarosserie, umfassend einen Befestigungsbereich (5), der eine Lippe (28) trägt, welche dazu angepaßt ist, entlang des Umfangs durch den Befestigungsbereich (5) positioniert zu werden, und eine erste Kante von Ziermaterial (30) oder dergleichen auf der Innenseite des Fahrzeugs umklammemd aufzunehmen,
**dadurch gekennzeichnet,**
**daß** der Befestigungsbereich (5) auch Aufnahmemittel (26, 32) für eine Kante trägt, die weiter auswärts an der Öffnung als die Lippe (28) durch den Befestigungsbereich (5) angeordnet sind, um eine zweite Kante Ziermateriais (30A) oder dergleichen an der Innenseite des Fahrzeugs umgreifend aufzunehmen.

2. Leiste nach Anspruch 1, **dadurch gekennzeichnet, daß** das Aufnahmemittel für die Kante eine flexible Wand (32) aufweist, gegen die die zweite Kante des Ziermaterials (30A) drückt und welche nachgibt, um diese Kante zu umgreifen.

3. Leiste nach Anspruch 2, **dadurch gekennzeichnet**, das die flexible Wand eine Wand (32) einer Hohlkammer (26) ist, in welche hinein die flexible Wand (32) durch den zweiten Rand des Ziermaterials (30A) gebogen wird.

4. Leiste nach einem der Ansprüche 1 bis 3, **dadurch gekennzeichnet, daß** der Befestigungsbereich (5) einen Dichtbereich (20) trägt, welcher dazu angepaßt ist, um durch den Befestigungsbereich (5) auf der Außenseite der Öffnung angebracht zu werden, um so abdichtend durch das Schließteil der Öffnung komprimiert zu werden.

5. Leiste nach Anspruch 4, **dadurch gekennzeichnet, daß** das Aufnahmemittel für den Rand (26, 32) durch den Dichtbereich (20) getragen wird.

6. Leiste nach einem der vorangehenden Ansprüche, **dadurch gekennzeichnet, daß** der Befestigungsbereich (5) rinnenförmig ist, um umgreifend einen Flansch (6), der sich entlang des Umfangs der Öffnung erstreckt, zu greifen.

7. Leiste nach Anspruch 6, **dadurch gekennzeichnet, daß** die Lippe (28) sich entlang der Außenseite der einen Seitenwand der Rinne erstreckt.

8. Leiste nach Anspruch 7, **dadurch gekennzeichnet, daß** sich die Lippe (28) im wesentlichen von der Verbindung zwischen der Außenseite des Rinnenbodens und dieser einen Seitenwand erstreckt.

9. Leiste nach Anspruch 8, **dadurch gekennzeichnet, daß** das Aufnahmemittel für die Kante (26, 32) benachbart zur Verbindung zwischen der Außenseite des Rinnenbodens und der anderen Seitenwand angebracht ist.

10. Dicht-, Zier- oder Abdeckleiste, zur Anbringung entlang des Umfangs einer verschließbaren Öffnung einer Fahrzeugkarosserie, umfassend einen Befestigungsbereich (5), welcher einen Dichtbereich (20) trägt, welcher dazu angepaßt ist, um durch den Befestigungsbereich (5) so plaziert zu werden, um so abdichtend durch das Schließteil der Öffnung komprimiert zu werden, und welcher auch eine Lippe (28) trägt, um eine erste Kante von Ziermaterial (30) oder dergleichen an der Innenseite des Fahrzeugs umgreifend aufzunehmen, **dadurch gekennzeichnet, daß** der Dichtbereich (20) Aufnahmemittel für eine Kante (26, 32) aufweist, um eine zweite Kante aus Ziermaterial (30A) an der Innenseite des Fahrzeugs umgreifend aufzunehmen.

11. Leiste nach Anspruch 10, **dadurch gekennzeichnet, daß** das Aufnahmemittel für die Kante eine flexible Wand (32) aufweist, welche entlang der zweiten Kante des Ziennaterials (30A) nachgibt.

12. Leiste nach Anspruch 11, **dadurch gekennzeichnet, daß** die flexible Wand (32) die äußere Wand einer Hohlkammer (26) des Dichtbereichs ist.

13. Leiste nach Anspruch 10, **dadurch gekennzeichnet, daß** der Befestigungsbereich (5) rinnenförmig ist, um einen Befestigungsflansch (6), welcher sich entlang der Öffnung erstreckt, umgreifend zu umfassen, daß der Dichtbereich (20) auf der Außenseite der einen Seitenwand der Rinne befestigt ist, und daß die Lippe (28) angebracht ist, um sich über die Außenseite der gegenüberliegenden Seitenwand der Rinne zu erstrecken.

14. Leiste nach Anspruch 13, **dadurch gekennzeichnet, daß** sich die Lippe (28) von der Außenseite des Rinnenbodens erstreckt.

15. Fahrzeug, welches eine verschließbare Öffnung entlang des Umfangs definiert, an welchem eine Dicht-, Zier- oder Abdeckleiste gemäß einem der vorangegangenen Ansprüche befestigt ist, **dadurch gekennzeichnet, daß** die Kante des Ziermaterials (30) auf der Innenseite des Fahrzeugs benachbart zur Öffnung umgreifend von der Lippe (28) nur entlang eines ersten Teils des Umfangs der Öffnung aufgenommen wird und umgreifend vom Aufnahmemittel für den Rand (26, 32) nur entlang eines zweiten Teils des Umfangs der Öffnung aufgenommen wird.

16. Fahrzeug nach Anspruch 15, **dadurch gekennzeichnet, daß** die verschließbare Öffnung eine Türöffnung des Fahrzeugs ist.

17. Fahrzeug nach Anspruch 16, **dadurch gekennzeichnet, daß** der erste Teil des Umfangs der Öffnung die A-Säule, den Dachteil und den oberen Teil der B-Säule des Fahrzeugs enthält, und der zweite Teil der Öffnung den unteren Teil der B-Säule enthält.

## Revendications

1. Ruban d'étanchement, d'habillage ou de finition destine à être monté le long de la périphérie dune ouverture refermable dans une carrosserie de véhicule, comprenant une partie de montage (5) portant une lèvre (28) adaptée à être positionnée le long de la périphérie par la partie de montage (5) et à recevoir en l'embrassant une première bordure d'un matériau d'habillage (30) ou similaire sur l'intérieur du véhicule, **caractérisé en ce que** la partie de montage (5) supporte également des moyens de réception de bordure (26, 38) qui sont espacés vers l'extérieur de l'ouverture plus loin que la lèvre (28) par la partie de montage (5), afin de recevoir en l'embrassant une deuxième bordure de matériau d'habillage (30A) ou similaire sur l'intérieur du véhicule.

2. Ruban selon la revendication 1, **caractérisé en ce que** les moyens de réception de bordure comprennent une paroi flexible (32) contre laquelle vient presser la deuxième bordure du matériau d'habillage (30A), et qui fléchit afin d'embrasser cette bordure.

3. Ruban selon la revendication 2, **caractérisé en ce que** la paroi flexible est une paroi (32) d'une chambre creuse (26) dans laquelle la paroi flexible (32) est fléchie par la deuxième bordure du matériau d'habillage (30A).

4. Ruban selon l'une quelconque des revendications 1 à 3, **caractérisé en ce que** la partie de montage (5) supports une partie d'étanchement (20) qui est adaptée à être positionnée par la partie de montage (5) sur l'extérieur de l'ouverture, afin d'être ainsi comprimée avec étanchement par la fermeture pour l'ouverture.

5. Ruban selon la revendication 4, **caractérisé en ce que** les moyens de réception de bordure (26, 32) sont portés par la partie d'étanchement (20).

6. Ruban selon l'une quelconque des revendications précédentes, **caractérisé en ce que** la partie de montage (5) est en forme de canal afin de saisir en l'embrassant une bride (6) qui court le long de la périphérie de l'ouverture.

7. Ruban selon la revendication 6, **caractérisé en ce que** la lèvre (28) s'étend sur l'extérieur d'une paroi latérale du canal.

8. Ruban selon la revendication 7, **caractérisé en ce que** la lèvre (28) s'étend sensiblement depuis la jonction entre l'extérieur de la base du canal et ladite paroi latérale.

9. Ruban selon la revendicatzan 8, **caractérisé en ce que** les moyens de réception de bordure (26, 32) sont situés adjacents à la jonction entre l'extérieur de la base du canal et l'autre paroi latérale.

10. Ruban d'étanchement, d'habillage ou de finition destiné à être monté le long de la périphérie d'une ouverture refermable dans une carrosserie de véhicule, comprenant une partie de montage (5) qui supporte une partie d'étanchement (20) adaptée à être positionnée par la partie de montage (5) de manière à être comprimée avec étanchement par la fermeture de l'ouverture, et qui supporte également une lèvre (28) afin de recevoir en l'embrassant une première bordure d'un matériau d'habillage (30) où similaire sur l'intérieur du véhicule, **caractérisé en ce que** la partie d'étanchement (20) inclut des moyens de réception de bordure (26, 32) afin de recevoir en l'embrassant une deuxième bordure de matériau d'habillage (30A) sur l'intérieur du véhicule.

11. Ruban selon la revendication 10, **caractérisé en ce que** les moyens de réception de bordure comprennent une paroi flexible (32) qui fléchit autour de la deuxième bordure du matériau d'habillage (30A).

12. Ruban selon la revendication 11, **caractérisé en ce que** la paroi flexible (32) est la paroi extérieure d'une chambre creuse (26) de la partie d'étanchement.

13. Ruban selon la revendication 10, **caractérisé en ce que** la partie de montage (5) est en forme de canal afin de saisir en l'embrassant une bride de montage (6) qui court autour de l'ouverture, **en ce que** la partie d'étanchement (20) est montée sur l'extérieur d'une paroi latérale du canal, et **en ce que** la lèvre (28) est montée de manière à s'étendre au-dessus de l'extérieur de la paroi latérale opposée du canal.

14. Ruban selon la revendication 13, **caractérisé en ce que** la lèvre (28) s'étend depuis l'extérieur de la base du canal.

15. Véhicule définissant une ouverture refermable, le long de la périphérie de laquelle est monté un ruban d'étanchement, d'habillage ou de finition selon l'une quelconque des revendications précédentes, **caractérisé en ce que** le matériau d'habillage (30) sur l'interieur du véhicule en position adjacente à l'ouverture est tel que sa bordure est reçue en étant embrassée par la lèvre (28) autour dune première partie, uniquement, de la périphérie de l'ouverture, et que sa bordure est reçue en étant embrassée par les moyens de réception de bordure (26, 32) le long d'une deuxième partie, uniquement, de la périphérie de l'ouverture.

16. Véhicule selon la revendication 15, **caractérisé en ce que** l'ouverture refermable est une ouverture de porte du véhicule.

17. Véhicule selon la revendication 16, **caractérisé en ce que** la première partie de la périphérie de l'ouverture comprend le montant A, la partie de toiture, et la partie supérieure du montant B du vehicule, et la deuxième partie de l'ouverture comprend une partie inférieure du montant B.
